## Europäisches Patentamt
## European Patent Office
## Office européen des brevets

(11) Publication number: **0 077 095**
**B1**

(12) **EUROPEAN PATENT SPECIFICATION**

(45) Date of publication of patent specification: **26.11.86**

(21) Application number: **82201234.0**

(22) Date of filing: **04.10.82**

(51) Int. Cl.⁴: **G 03 G 15/00, G 05 D 13/62**

(54) Copying machine and a control system for the same.

(30) Priority: **08.10.81 NL 8104591**

(43) Date of publication of application:
**20.04.83 Bulletin 83/16**

(45) Publication of the grant of the patent:
**26.11.86 Bulletin 86/48**

(84) Designated Contracting States:
**DE FR GB NL**

(56) References cited:
**DE-A-1 588 313**
**GB-A-2 008 494**
**US-A-3 746 957**
**US-A-4 270 860**

(73) Proprietor: **Océ-Nederland B.V.**
**St. Urbanusweg 43**
**NL-5914 CC Venlo (NL)**

(72) Inventor: **Eertink, Bastiaan Bernard Boele**
**Land van Kessel 7**
**Grubbenvorst (NL)**

Courier Press, Leamington Spa, England.

EP 0 077 095 B1

**Description**

This invention relates to a copying machine comprising a number of workstations which are installed along the path of circulation of an image element being moved, an original conveyor means for moving an original in synchronism with the said element, a pulse generator for generating pulses at a frequency being proportional to the speed of moving the image element, and a control device which counts the pulses being generated and controls the workstations in dependence on the number of pulses being counted.

Such a copying machine is known from the US Patent No. 4 270 860.

In the known copying machine an image of an original can be formed on the image element by actuating and deactuating the workstations in a predetermined sequence and in synchronism with the movement of the original and of the image element.

On behalf of the synchronisation the control device counts the pulses delivered by a pulse disc, mechanically coupled to the transport device of the image element. Since some of the actuating and deactuating moments must be determined with a high degree of accuracy, a high precision pulse disc, is required. Such pulse disc comprises a light-source and a photosensitive element, between which a perforated disc is rotated.

In a copying machine with powder development such pulse discs may be the cause of faults, when, owing to the deposit of powder, the photosensitive element does not, or insufficiently, react on changes in the light intensity caused by the movement of the perforated disc.

It is an object of the invention to provide a copying machine, provided with a simple control system, with which a reliable and accurate synchronisation between the actuating and deactuating of the workstations, the movement of the original and the movement of the image element can be attained.

A copying machine according to the invention is characterised in that the copying machine is provided with a synchronous motor for driving the image element, and with at least one synchronous motor for driving the original conveyor means, the frequency (frequencies) of the voltages supplied to said synchronous motors and the frequency at with the pulses are generated being proportional to and derived from the frequency of a common frequency source.

The use of a common frequency source to obtain the proportional relationship between the pulse frequency and the frequencies of the motor supply voltages guarantees an exact synchronisation between the actuating and deactuating moments of the workstations, the movement of the original and the movement of the image element without application of a dust-sensitive pulse disc. Consequently the control system is more reliable. Since the pulse generator, owing to the lack of moving parts, is hardly liable to mechanical wear this reliability is additional increased.

If the copying machine is provided with a programmable control system comprising at least one interrupt input for interrupting a current programme in response to an interrupt pulse fed to said interrupt input and for the priority treatment of an interrupt programme, the copying machine also being provided with a conveyor means for an original to be copied and with a conveyor means for an image element upon which an image derived from the original can be formed, and with means for generating first interrupt pulses in synchronism with the conveyance of the original, and second interrupt pulses in synchronism with the conveyance of the image element, each of the conveyor means comprises a synchronous motor, and a source is provided which delivers a signal with a first A.C. voltage component, means are provided which are connected to the source for deriving a control signal from the A.C. voltage component of the source signal for each of the synchronous motors, said control signals containing an A.C. voltage component whose frequency is always proportional to the frequency of the first A.C. voltage component of the source signal and the A.C. voltage component of one of the control signals forms the interrupt pulses.

Consequently, the entire programmable control system can operate with one source of interrupt pulses without synchronisation of the conveyance of the original with the conveyance of the image element being lost and without control of the copying machine processing stations being jeopardised.

The invention will now be described with reference to the accompanying drawings wherein:

Fig. 1 is a block diagram of an embodiment of a device for controlling a stepping motor.

Fig. 1A is an output signal of a device according to Fig. 1.

Fig. 2 is a developed diagram of a block diagram according to Fig. 1.

Fig. 2A is an example of the addresses and contents of a number of the memory locations of the memory in Fig. 2.

Figs. 3A and 3B are examples of a required course for starting and stopping a stepping motor.

Figs. 4A to 4C inclusive illustrate three ways in which the contents of the memory locations can be determined in order to obtain a required course.

Fig. 5 is a block diagram of a second embodiment of a device according to the invention.

Fig. 6A shows part of a memory used in a device according to Fig. 5.

Fig. 6B shows another part of a memory used in a device according to Fig. 5.

Fig. 7 is a flow diagram of a programme used in a device according to Fig. 5.

Fig. 8 is a flow diagram of an interrupt programme used in a device according to Fig. 5.

Fig. 9 is a diagrammatic section of an electrophotographic copying machine and part of its control system.

Fig. 10 is a block diagram of the control system for the motors in the machine according to Fig. 9 and

Fig. 11 is a block diagram of an alternative for part of the control system shown in Fig. 9.

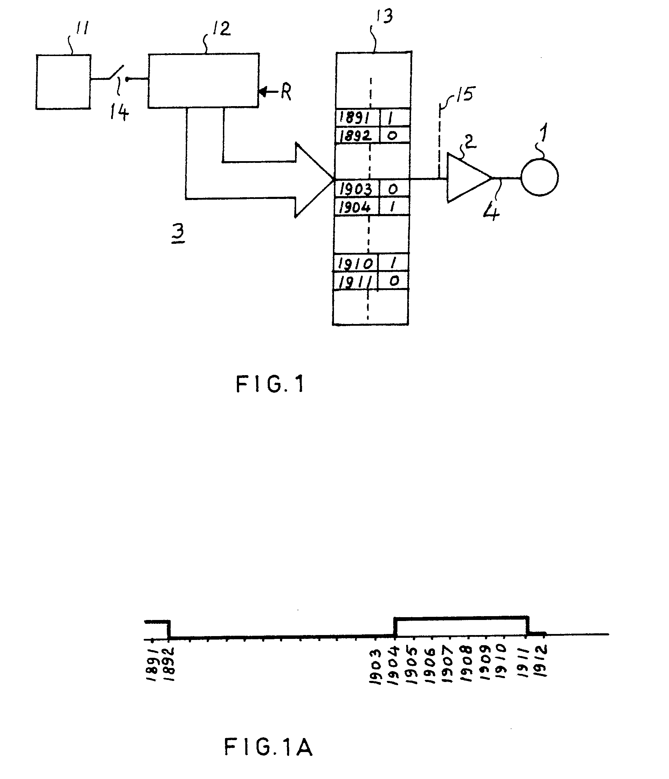

Referring to Fig. 1, reference 1 denotes a stepping motor. A power amplifier 2 receives pulses from a pulse source 3 and amplifies the received pulses so that each 0—1 changeover results in a pulse signal that is fed to the stepping motor via line 4 and that causes the stepping motor to rotate one step on. Pulse source 3 comprises a pulse generator 11, a pulse counter 12 and an addressable memory 13. A pulse output of pulse generator 11 is adapted to be connected via a switch 14 to a counting input of pulse counter 12. The number of counted pulses is present in binary form at the counting output of the pulse counter 12. The counting output of pulse counter 12 is connected to the address input of memory 13. Each memory location of memory 13 contains either a "0" or a number other than "0". The memory output of memory 13 is connected to an input of the power amplifier 2. Depending upon the content of the addressed memory location the output signal of memory 13 is either a "0" signal or a signal differing from "0".

The memory locations of memory 13 are arranged in groups with consecutive addresses and with the same content.

Groups whose memory location content is equal to "0" alternate with groups whose memory location content differs from "0". The size of the groups decreases with increasing address. As an example, two of such groups are shown in Fig. 1, the group having the addresses 1892 ... 1903 with "0" as content and a group having the addresses 1904 ... 1910 with "1" as content.

The operation of a device according to the block diagram shown in Fig. 1 is as follows:

Before switch 14 connects the pulse output of pulse generator 11 to the counting input of pulse counter 12, a predetermined count, generally 0, is present at the counting output of the pulse counter 12, and is produced for instance by a reset signal R. The signal present at the counting output of pulse counter 12 ensures that the content of the starting memory location whose address is the same as that signal is present at the memory output of the memory 13. By means of the switch 14 the pulse generator 11 is then connected to the pulse counter 12. As a result of pulses being fed to the pulse counter 12, the binary number at the counting output thereof will become one more on each pulse received from the pulse generator 11.

Since the counting output of the pulse counter 12 is connected to the address input of the memory 13, a subsequent memory location of memory 13 will be addressed in response to each pulse from the pulse generator 11. This means that the memory locations following the starting memory location are addressed consecutively and their content fed to the memory output at the frequency at which the pulse generator 11 generates pulses.

In Fig. 1A is indicated how the signal at the memory output of the memory 13 changes on consecutive addressing of the memory locations with the addresses 1891 ... 1912.

Assuming that the output signal of pulse counter 12 corresponds to address 1891, the content of the memory location with address 1892 will appear at the memory output of the memory 13 in response to the next pulse from the pulse generator 11. Since the content of the memory location with the address 1891 was a "1" and the content of the memory location with the address 1892 was a "0", the output signal of the memory 13 therefore will change from a "1" signal to a "0" signal in response to the said pulse.

Since the content of the memory locations having the addresses 1893 ... 1903 is also "0", the output signal of the memory 13 will not change in response to the following 11 pulses from the pulse generator 11. On the next pulse from the pulse generator 11, the output signal of the pulse counter 12 will correspond to the memory location having the address 1904. The content of the memory location having the address 1904 is a "1" and the output signal of the memory 13 will therefore change from a "0" signal to a "1" signal in response to this pulse from the pulse generator 11. This change of a "0" signal to a "1" signal is amplified by the power amplifier 2 and fed to the stepping motor 1, which makes one step as a result. During the next 6 pulses from the pulse generator 11, the output signal from the memory 13 no longer changes because the content of the memory locations 1905 ... 1910 is also "1". In response to the next pulse from the pulse generator 11, the output signal of the memory 13 again changes to a "0" signal because the content of the memory location having the address 1911 is a "0".

From the starting memory location the content of successive memory locations is fed to the memory output in the manner described above, at the frequency at which the pulse generator 11 generates pulses. The size of the groups of memory locations having the same content and having consecutive addresses is initially large and decreases as the addresses increase. As the sizes of the groups decrease, it will occur more frequently that more than two consecutive groups are equal sized, in order to achieve smooth starting of the stepping motor. Pulse generator 11 generates pulses at a predetermined frequency. As a result, initially, i.e. just after the switch 14 has been closed, the frequency of the pulses at the memory output of memory 13 will be low and this frequency will increase as memory locations of a higher address are addressed.

Finally this frequency will have reached a required value, whereafter the power amplifier 2 will be supplied only with that frequency, e.g. from a pulse source not shown and indicated diagrammatically by the dashed line 15.

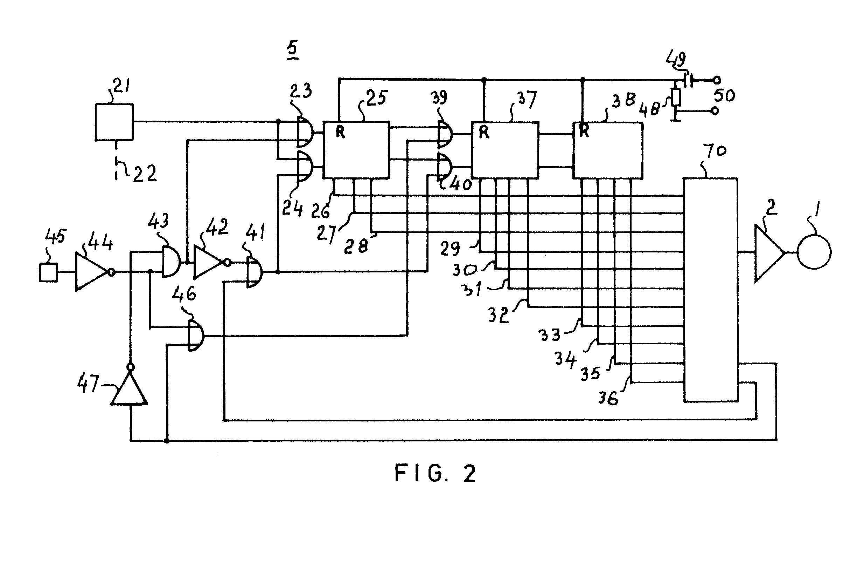

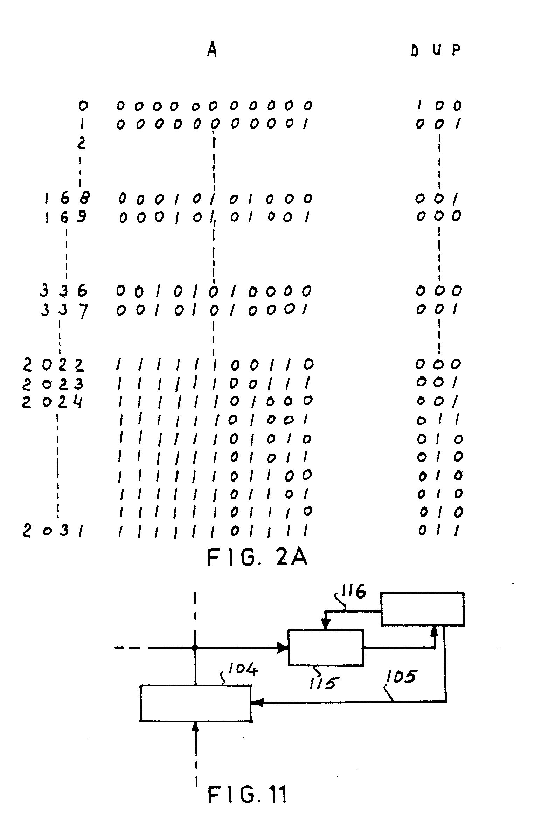

Another way of supplying pulses at a frequency of the required value to the power amplifier will be described in detail with reference to Fig. 2. The stepping motor can also be stopped in the same way as described above in connection with its starting. For this purpose, for example, the memory contains a second number of groups of memory locations, the sizes of which groups increase with increasing address. By means of the signal R the count of counter 12 is made equal to the starting address of the second number of groups of memory locations and pulses are fed from the pulse generator 11 to the pulse counter 12 from a suitable moment on. Through the changing count of the pulse counter 12 the content of the memory locations of the second number of groups is then fed successively to the power amplifier 2. Since the sizes of the groups increase with increasing address, the frequency of the pulse signal at the memory output of memory 13 will decrease and the stepping motor will stop not only gradually, but also in a predetermined manner. This is of great importance for all those applications in which both rapid rotation of the stepping motor and very accurately determined starting and/or end positions of the stepping motor are required.

If the speed of rotation of the stepping motor is to be capable of being changed, the pulse generator 11 can be so selected that the pulse frequency can be adjusted according to the required speed of rotation of the stepping motor.

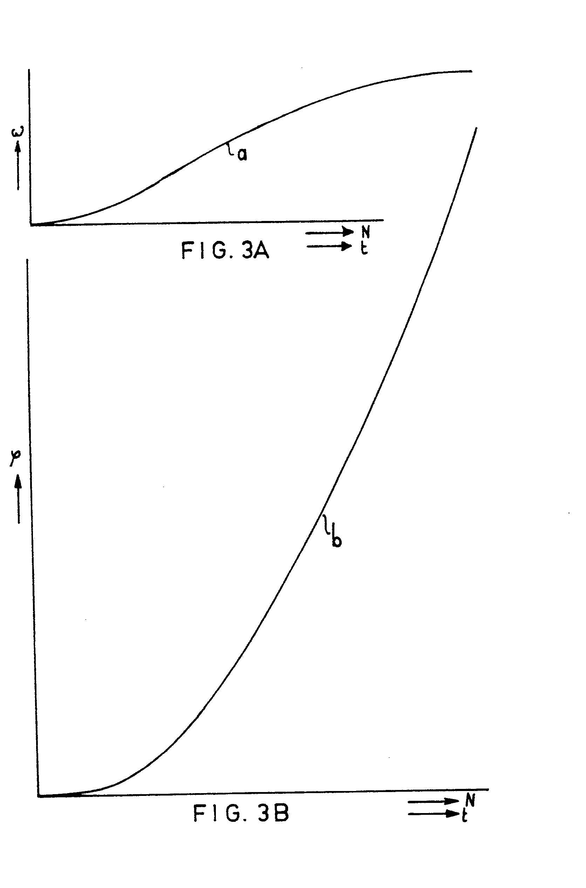

If it is required to start the stepping motor via one of a plurality of different speed profiles (see Fig. 3) a number of groups of memory locations can be reserved for each speed profile. It may be required for the stepping motor to be capable of being started or stopped in more than one way. A number of groups of memory locations with consecutive addresses in the memory 13 can be selected for each way, with a starting address and an end address, the pulse counter 12 traversing the counts between the values corresponding to the relevant starting address and the relevant end address.

If the memory 13 is in the form of a replaceable integrated circuit, an integrated circuit of this kind provided with the correct content can be placed in the control device for each way in which the stepping motor is to be capable of being started.

Fig. 2 shows a control device 5 for a stepping motor 1, which control device delivers pulses to a power amplifier 2 which controls the stepping motor 1 with the amplified pulses. In response to each 0—1 changeover of the offered pulses the stepping motor 1 rotates one step further. The control device 5 comprises a pulse generator 21 which delivers pulses at a predetermined frequency, the term "predetermined" denoting that the frequency is not changed between starting and subsequent stopping of the stepping motor 1. The pulse generator 21 can be synchronized with another pulse source as shown diagrammatically by dashed line 22, the frequency of which can in the course of time fluctuate slightly about an equilibrium value. It is also possible to preset the pulse frequency of the pulse generator 21 to a required value so that the stepping motor 1 will be brought to a required speed of rotation. The pulse output of pulse generator 21 is connected to a first input of a 2-input OR gate 23 and to a first input of a 2-input OR gate 24. The output of the OR gate 23 is connected to the UP input of an UP/DOWN counter 25. The output of the OR gate 24 is connected to the DOWN input of the UP/DOWN counter 25. The UP/DOWN counter 25 is a 3-bit binary counter. The three output bits of counter 25 are connected by lines 26, 27 and 28 to the three least significant bits of the address input of an addressable memory 70. Of the other bits of the address input of memory 70, a number is connected via lines 29, 30, 31 and 32 to the four output bits of the 4-bit UP/DOWN counter 37 and the others are connected via the lines 33, 34, 35 and 36 to the four output bits of the 4-bit UP/DOWN counter 38. The UP output of the UP/DOWN counter 25 is connected to a first input of a 2-input OR gate 39. The output of the OR gate 39 is connected to the UP input of the UP/DOWN counter 37. The DOWN output of the UP/DOWN counter 25 is connected to a first input of a 2-input OR gate 40. The output of the OR gate 40 is connected to the DOWN input of the UP/DOWN counter 37. The UP and the DOWN output of the UP/DOWN counter 37 are connected to the UP and the DOWN input of the UP/DOWN counter 38 respectively. The second input of the OR gate 24 and the second input of the OR gate 40 are both connected to the output of a 2-input OR gate 41.

A first input of the OR gate 41 is connected via an INVERTER 42 to the output of a 2-input AND gate 43.

The output of the AND gate 43 is also connected to the second input of the OR gate 23. A first input of the AND gate 43 is connected via an INVERTER 44 to a signal source 45. The signal source 45 delivers a "1" or a "0" signal depending on whether the counters 25, 37 and 38 are to count up or down, or whether the stepping motor 1 is to be started or stopped. The output of INVERTER 44 is also connected to the first input of a 2-input OR gate 46. The output of OR gate 46 is connected to the second input of OR gate 39. The second input of OR gate 46 is connected to one of the output bits of the memory 70, which we shall hereinafter refer to as the UP output. The UP output is also connected to the second input of the AND gate 43 via the INVERTER 47. A second output of memory 70, which we shall hereinafter refer to as the DOWN output, is connected to the second input of the OR gate 41. A third output of memory 70 which we shall hereinafter refer to as the PULSE output, is connected to the input of the power amplifier 2, the output of which is connected to the stepping motor 1. The RESET inputs R of the UP/DOWN counters 25, 37 and 38 are connected to the junction of a resistor 48 and a capacitor 49 which are connected in series with one another between the poles of a feed voltage source 50 for the control device 5.

In the control device 5 as shown in Fig. 2, memory 70 should be at least a 3-bit type, i.e. each memory location must be capable of containing at least a 3-bit number, i.e. one bit for the PULSE output, one bit for the UP output and one bit for the DOWN output. These three bits are hereinafter referred to respectively as the PULSE bit P, the UP bit U and the DOWN bit D. An 11 bit addressing is also shown, simply by way of example, since it can if required be one of more or less bits. It should be noted for example that the counters 25, 37 and 38 can be integrated CMOS circuits of the type 40193 and that the memory 70 can be an 8-bit EPROM of type 2716 made by Intel.

The operation of the control device 5 will now be described, reference being made to Fig. 2A in which the address and the content of the DOWN bit D, the UP bit U and the PULSE bit P are shown in respect of a number of memory locations.

By way of example, the PULSE bit P of the group of memory locations whose addresses run from 00000000001 to 00010101000 inclusive is equal to "1" and of the joining group of memory locations with the addresses 00010101001 to 00101010000 inclusive is equal to "0". Of the next group beginning with address 00101010001, the PULSE bit is again "1" and so on. The sizes of the groups decrease continuously as the address increases. The content of the memory locations having the address 11111100110 to 11111101111 inclusive is also shown for reasons which will be apparent from the following.

As a result of the supply voltage being switched on, a pulse forms at the junction of resistor 48 and capacitor 49 and resets the counters 25, 37 and 38, i.e. the three counters carry a "0" signal on all the outputs.

As a result, in memory 70 memory location of address 00000000000, hereinafter also referred to as memory location "0" (=zero decimal) is addressed and the relevant content of memory location "0", i.e. the DOWN bit, the UP bit and the PULSE bit, is present at the relevant outputs of memory 70.

In this case the DOWN output carries a "1" signal and the UP output and the PULSE output carry a "0" signal. Assuming that the output signal of the signal source 45 is a "0" signal, i.e. the stepping motor does not need to be started, then with the known truth tables for AND and OR gates and INVERTERS it is a simple matter to check that at least one of the inputs of each of the OR gates 23, 24, 39 and 40 carries a "1" signal. Consequently the output signal of none of the OR gates 23, 24, 39 and 40 can change and hence none of the output signals of the counters 25, 37 and 38 on lines 26, ... 36 changes. The existing situation is thus maintained. The situation will change as soon as the signal source carries a "1" signal in order to start the stepping motor 1. Signal source 45 may be a manually operated switch or alternatively form part of the control system of a device with which the stepping motor 1 co-operates. Several possibilities are feasible for the signal source 45. The only important fact in the scope of the invention is that the signal source 45 delivers a "1" signal in order to start the stepping motor 1 and keep it going, and a "0" signal in order to stop the stepping motor 1 and keep it stopped.

The appearance of a "1" signal at the output of signal source 45 results in one of the inputs of the OR gates 23 and 39 carrying a "0" signal so that counters 25, 37 and 38 count up. At least one of the inputs of each of the OR gates 24 and 40 continues to carry a "1" signal, i.e. those inputs which are connected to the output of the OR gate 41. After the counter 25 has counted one pulse, memory location "1" is addressed. The relevant content of this memory location is as follows: DOWN bit 0, UP bit 0 and PULSE bit 1, hereinafter referred to as 001.

Both the signal at the DOWN output and the signal at the PULSE output change in value in response to the first counted pulse. The change of the DOWN output, which is connected only to an input of the OR gate 41, has no effect on the output signal of the OR gate 41, and hence no effect on the output signals of the OR gates 24 and 40, because the output signal of the INVERTER 42 is a "1" signal. The change of the signal of the PULSE output from a "0" signal to a "1" signal results in the stepping motor 1 being rotated one step via the power amplifier 2. The second pulse counted by the counter 25 results in memory location "2" being addressed. The content of memory location "2" in respect of the relevant bits is the same as that of memory location "1". The output signals at the DOWN output, the UP output and the PULSE output do not therefore change. This situation continues up to and including the 168th pulse. After the 168th pulse has been counted, memory location "168" is addressed (see Fig. 2A), the relevant content of which is still equal to the content of memory location "1". After the 169th pulse has been counted, memory location "169" is addressed. The content of memory location "169" differs from the content of memory location "168" in that the PULSE bit P is 0. In response to the 169th pulse, the signal at the PULSE output changes from a "1" signal to a "0" signal. Since stepping motor 1 reacts solely to a 0—1 changeover and not to a 1—0 changeover, stepping motor 1 remains stationary in the position which was occupied after the first pulse. This situation does not change up to and including the 336th pulse.

After the 337th pulse has been counted, memory location "337" is addressed. The relevant content of memory location "337" is again equal to the relevant content of the memory locations "1", ..., "168", i.e. 001.

In response to the 337th pulse the output signal at the PULSE output changes from a "0" signal to a "1" signal and as a result the stepping motor 1 rotates one step on. The output signals of the DOWN output and the UP output do not change.

The output signals of the DOWN, UP and PULSE output then continue to remain unchanged for some time. As discussed hereinbefore in connection with Fig. 1, the number of memory locations following memory location "337" whose content is equal to that of memory location "337" is smaller than or at most equal to 167, so that the duration of the "1" signal at the PULSE output is shorter than or equal to the duration of the "1" signal that was present at the PULSE output during the pulses 1 to 168 inclusive. The groups of memory locations with consecutive addresses having the same content, such as memory locations "1" to "168" inclusive and "169" to "336" inclusive decrease in size with increasing address. Finally, the groups have become so small that the sum of the number of consecutive memory locations with a 1 at the PULSE bit and with a 0 at the PULSE bit is equal to 8. Consequently, as these memory locations are traversed a pulse signal is formed at the PULSE output with a frequency which is one-eighth of the frequency of the pulse generator 21. This continues until memory location "2023" inclusive, the relevant content of which is 001. The next 8 memory locations "2024" to "2301" inclusive have a special significance. By means of memory locations "2024", ..., "2031" it is possible to continue to control the stepping motor at the frequency reached. To this end, the relevant content of these memory locations is as shown in Fig. 2A. The DOWN bit is always 0, while the UP bit is 1 except in memory location "2024". The PULSE bit is 1 in the memory locations "2024", "2025" and "2031" and 0 in the memory locations "2026", ..., "2030".

Of the memory locations "2024", ..., "2031", only the three least significant bits always change value. Those are the three output bits of the counter 25. The output bits of the counters 37 and 38 do not change value when traversing the counts which address the memory locations "2024", ..., "2031". By ensuring that the counts of counters 37 and 38 cannot change and that the count of counter 25 can change, an eight-counter is obtained, because by the UP output carrying a "1" signal via the INVERTER 47, the AND gate 43, the INVERTER 42 and the OR gate 41, the OR gates 24 and 40 do not pass signals to the DOWN input of the counters 25 and 37, and via the OR gate 46 the OR gate 39 does not pass signals to the UP input of the counter 37.

Only the OR gate 23 still passes signals to the UP input of counter 25. Consequently, the counting outputs of counter 25 successively traverse the counts

000,001,010,011,100,101,110,111,000,001,010,

etc. It should be noted that to achieve this result it is not essential for the UP bit in the memory locations "2025", ..., "2030" to be a 1. It is important that the UP bit should be 1 in memory location "2031" because then there is generated by counter 25 at the input of gate 39 a signal that can be counted by counter 37. Since the UP bit, however, is 1 in memory location "2031", the signal transmission is blocked by the OR gate 39. In connection with the following description of a controlled method of re-stopping stepping motor 1 by means of control device 5, the memory locations "2025", ..., "2030" are however also provided with a 1 at the location of the UP bit. The stoppage of the stepping motor 1 started and kept in motion in the manner described above is initiated by making the output signal of signal source 45 zero. If this accidentally occurs at the time when one of the memory locations "2024" or "2031" is addressed, then stoppage of the stepping motor 1 can immediately be started by starting the counters 25, 37 and 38 to count down from count 11111101000 to 00000000000. Memory locations "2024", ..., "0" are thus addressed successively and the stepping motor 1 is stopped controllably via the same speed profile as that with which it was started. It should be noted that on traversing the memory locations "2024", ..., "2031" the pulse-pause ratio of the pulses at the output of the memory 70 is equal to 3:5 because three of these memory locations carry a 1 and five of these memory locations carry a 0 at the location of the PULSE bit. If the output signal of the signal source 45 is made zero if one of the memory locations "2025", ..., "2030" is addressed, it is not possible immediately to start counting down by means of the counters 25, 37 and 38 because the pulse-pause ratio of 3:5 would no longer be obtained and there would be an abrupt phase shift in the signal at the PULSE output. Since the UP bits of the memory locations "2025", ..., "2030" are now 1, it is attained as already described above that the OR gates 24 and 40 do not pass pulses so that counters 25, 37 and 38 cannot yet start counting down. That cannot take place until counting reaches 2031, whereafter counter 25 is at count 000, so that memory location "2024" is addressed. Since the UP bit in memory location "2024" is 0, the OR gates 24 and 40 come into the state in which they pass signals to counters 25 and 37 and the OR gates 23 and 39 come into the state in which they block the signals. The counters 25, 37 and 38 then count down to 0 without there being any phase shift in the signal at the PULSE output of the memory 70. As soon as count 00000000000 is reached, the DOWN output will carry a "1" signal because the content of memory location "0" is 100. In combination with the fact that the output signal of signal source 45 is "0", the fact thay the signal at the DOWN output is "1" results in the OR gates 23, 24, 39 and 40 passing no longer signals so that memory location "0" continues to be addressed and the stepping motor 1 continues to be stationary. The control device 5 shown in Fig. 2 enables a stepping motor to be started, kept in motion and re-stopped in a defined manner. Of course a slight modification of the configuration of the logic circuit between the signal source 45, the UP and the DOWN output and the counters 25, 37 and 38 enables a first part of the memory 70 to be used for starting the stepping motor 1 and a second part of the memory to be used for stopping it. The stepping motor 1 can thus be started via a first speed profile and stopped via a second speed profile. In the light of the extensive description that has been given with reference to Fig. 2, it is not necessary to describe this latter embodiment in detail with reference to a drawing.

Fig. 3A is an example of a speed profile illustrating the required speed of rotation ω avainst the time $t$ on the starting of a stepping motor 1 in a specific application.

Curve $a$ is shown as a gradual curve but it should be borne in mind that the speed of rotation ω of a stepping motor at a low ω can only be an average over a number of steps and has no connection with the speed at which the motor performs a step.

Fig. 3B shows the angle φ through which the motor has turned from a starting position against the time $t$ if starting is effected as shown in Fig. 3A. Since the frequency of the pulse generator 11 or 21 respectively is predetermined, curve $b$ is also the function representing the relationship between the angle φ through which the motor has turned and the number of pulses N that the pulse generator 11 or 21 respectively has delivered from the beginning of starting. In applications in which it is not so important how the speed of rotation ω is dependent upon the time but it is important how the speed of rotation is dependent upon the angle through which the motor has turned, ω in Fig. 3A should be reproduced as a function of the number of pulses N.

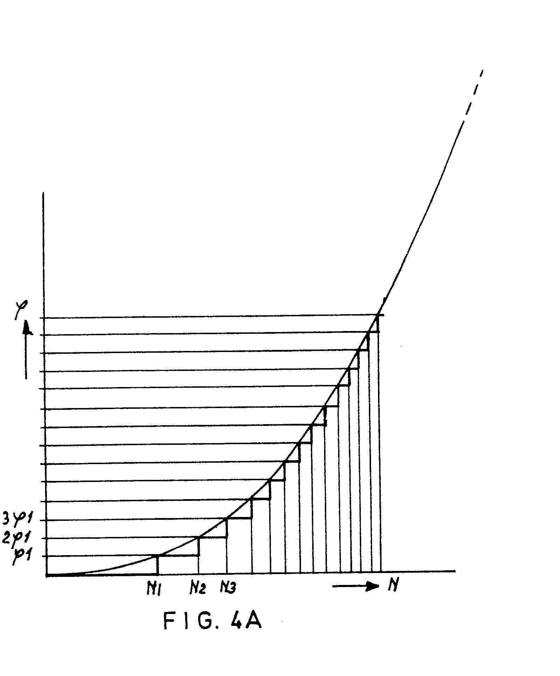

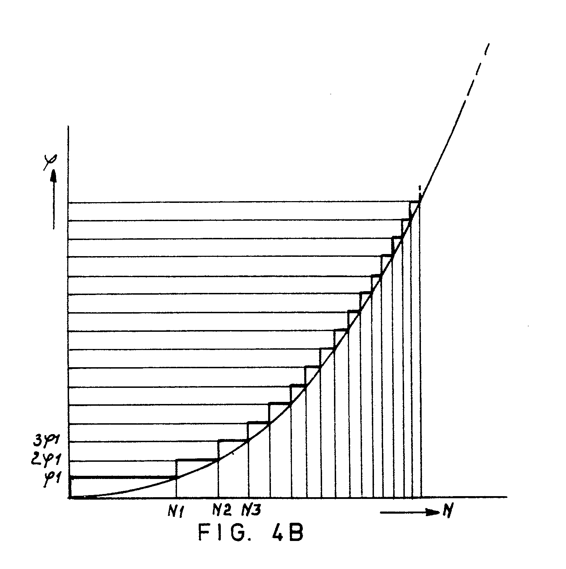

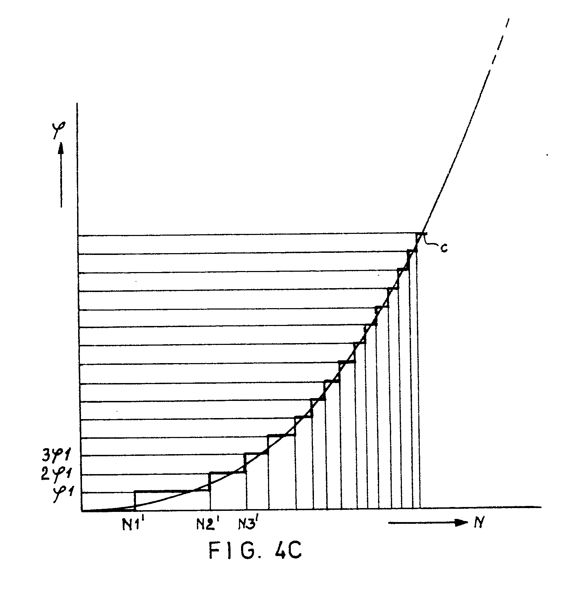

Figs. 4A to 4C inclusive show how the content of the memory locations of memory 13 or 70 respectively can be determined in order to obtain the profiles reproduced in Figs. 3A and 3B. Each transverse line along the vertical axis in Figs. 4A, 4B and 4C denotes one step of the stepping motor while the number of pulses to be counted is plotted along the horizontal axis. According to Fig. 4A, the first group of memory locations is filled with a 0 and the second group, in which a 1 is placed, starts with memory location N1, so that the first step causes a rotation to φ 1. The third group again contains 0 while the fourth group, which again contains a 1, starts with N2, so that the second step again causes a rotation through an angle φ 1 to the angle 2 φ 1, from the starting state. The sixth group starts with N3, and so on.

Similarly, in Fig. 4B, the first step is made at N=1 (similar to the diagram shown in Fig. 2A), and the next steps are made at N1, N2, N3 and so on. In Fig. 4C the steps are made at N1', N2', N3', so that the curve $c$ which indicates the angle as a frequency of N oscillates around the required curve. It follows from Fig. 4C that the memory locations 0 to N1'−1 inclusive contain a 0. It is of course also possible to approximate the required curve with the curve $c$ by deducting the value (N1'−1) from the counts N1', N2', N3' shown in Fig. 4C, so that the steps take place at the counts 1, (N2'−N1'+1), (N3'−N1'+1), and so on. This also applies to the curve in Fig. 4A, the same profile being obtained by having the steps take place at the counts 1, N2−N1+1, N3−N1+1. It should be noted that Figs. 4A to 4C inclusive show a graphic determination of the counts N at which the stepping motor must make a step.

It will be clear that if the relationship shown by the curve $a$ or $b$ (in Figs. 3A and 3B respectively) is known in mathematical form, the counts at which the stepping motor must make a step can also be readily calculated.

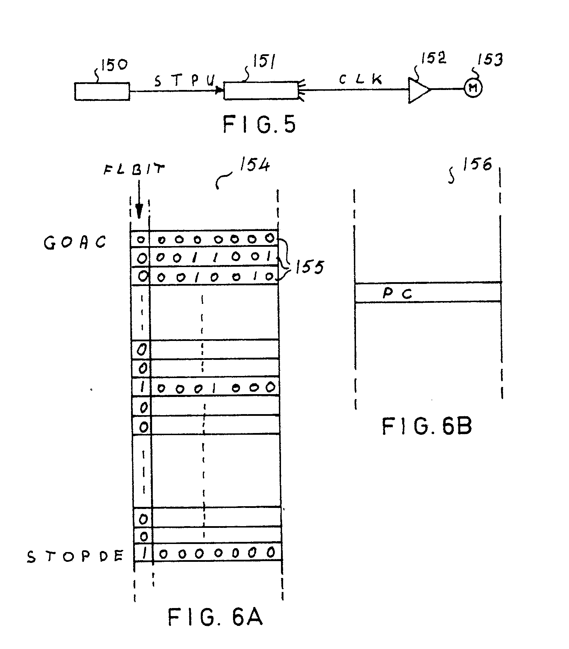

Figs. 5, 6, 7 and 8 are examples of how a control device for starting a stepping motor in a defined manner can be embodied by means of a programmable control system.

In Fig. 5, a pulse generator 150 generates pulses STPU at a predetermined frequency. The pulses STPU are detected and counted by means of a programmable control unit 151. One of the output signals of the control unit is the signal CLK. The signal CLK is the input signal for a power amplifier 152 whose output is connected to a stepping motor 153. The control unit 151 comprises a memory 154 in which a programme requiring to be performed is fixed and in which a number of figures 155 is fixed (Fig. 6A). The figures represent numbers of pulses which have to be counted by means of the control unit 151 before the output delivering the signal CLK can change its state.

Fig. 6A shows that part of the memory in which the figures are fixed. The first address bears the mark GOAC and the last address the mark STOPDE. One of the bits of the contents of the memory locations from GOAC to STOPDE inclusive is selected as the flag bit FLBIT, the meaning of which will be explained in detail in the following description. In addition to the flag bit FLBIT each of the memory locations contains a number the magnitude of which decreases from memory locations GOAC to the memory location in which the FLBIT changes from 0 to 1, and the magnitude of which in the following memory locations increases again as far as the memory location STOPDE.

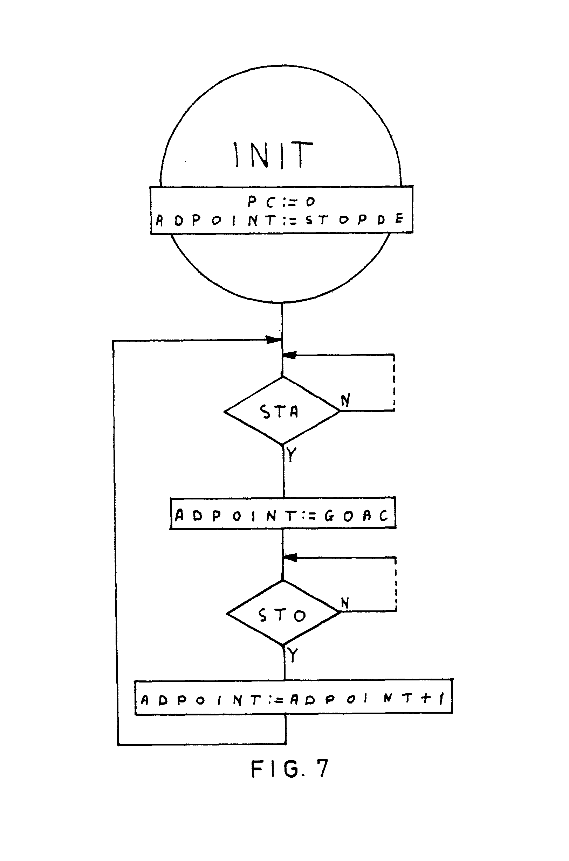

Fig. 6B shows a section of a read/write memory 156 forming part of the memory of the programmable control unit 151. One of the memory locations PC of the read/write memory 156 acts as a register in which there is retained the count of the number of pulses STPU counted by the programmable control unit 151. Fig. 7 shows that part of the programme which relates to the present invention as included in the memory of the programmable control unit 151. Forming part of an initiate section INIT of the programme, the content of the memory location PC is set to zero and an address pointer ADPOINT is made equal to STOPDE. A check is then made in the block STA to see whether the stepping motor 153 is to be started.

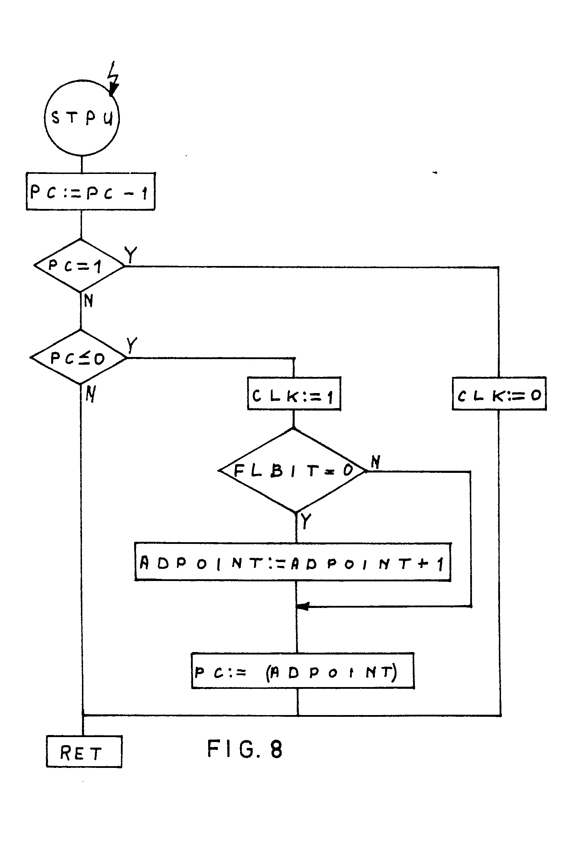

As long as this is not the case, the control unit 151 can occupy itself with other matters, as shown by the dashed line between the output N and the input of the block STA. If the control unit 151 has received a signal that the stepping motor 153 must be started, the address pointer ADPOINT is made equal to GOAC and the stepping motor will be started in the manner described in detail hereinbelow with reference to Fig. 8. The control unit 151 then checks in the block STO where the started stepping motor is to be stopped again. As long as this is not the case, the control unit 151 can occupy itself with other matters, as shown by the dashed line between the output N and the input of the block STO. If it is the case, the address pointer ADPOINT which, as will be described hereinafter, had stopped at the memory location whose FLBIT is equal to 1, is increased by 1. After the stepping motor has stopped, the address pointer ADPOINT will have again reached the memory location with the mark STOPDE and the control unit 151 is again ready to re-start the stepping motor 153.

The pulse generator 150 which delivers the pulses STPU is connected to an interrupt input of the programmable control unit 151. Each pulse STPU will interrupt the current programme and in response to the STPU pulse an interrupt programme will be run through with priority. This priority interrupt programme is shown in greater detail in Fig. 8.

In response to an interrupt pulse STPU the content of the memory location PC is reduced by 1.

Since the content of the memory location PC in the initiate section INIT had been set to zero, the content of the memory location PC becomes equal to −1 in response to the first interrupt pulse STPU. A check is made in the "PC=1" block whether the content of the memory location PC is equal to 1. Since this is not so, the process is continued via the output N to the block "PC≤0". This is the case, and so the output delivering the signal CLK is made equal to 1 via output Y. A check is then made whether FLBIT is equal to 0. This is not so because the address pointer ADPOINT points to the memory location with the mark STOPDE, whose FLBIT is equal to 1. Via the output N of the block "FLBIT=0" the content of the memory location PC is now made equal to the content of the memory location indicated by the address pointer ADPOINT. In this case, the memory location is the one marked STOPDE, the content of which is equal to zero. As long as the stepping motor 153 does not need to be started, the above-described part of the interrupt programme shown in Fig. 8 will be run through in response to each interrupt pulse STPU. The output delivering the signal CLK will always remain equal to 1 and the amplifier 152 will deliver a D.C. voltage signal so that the stepping motor 153 will not be started.

In response to a signal that the stepping motor 153 must be started as described in connection with Fig. 7, the address pointer ADPOINT is made equal to GOAC.

In response to the then next interrupt pulse STPU, the content of the memory location PC again becomes equal to −1. Via the output N of the block "PC=1" and the output Y of the block "PC≤0", the signal CLK remains equal to 1.

The question is then put whether FLBIT is equal to zero.

Since the memory location marked GOAC is now addressed, this question is answered in the affirmative and the address pointer ADPOINT is increased by 1 via the output Y of the block "FLBIT=0". As a result, the memory location following the one marked GOAC is now indicated. The content of this memory location is a number, e.g. 25, which is then written in the memory location PC. This concludes the interrupt programme and the programmable control unit returns to the interrupted programme. In response to the next interrupt pulse STPU, the current programme is again interrupted and the content of the memory location PC is again reduced by 1 to 24. The question whether the content of the memory location PC is equal to 1 is answered in the negative again and the question whether the content of the memory location PC is less than or equal to zero is also answered in the negative, thus concluding the interrupt programme and the programmable control unit 151 returns to the interrupted programme. In the same way, the signal CLK remains to 1 during 23 interrupt pulses STPU after the signal has been given to the control unit 151 that the stepping motor 153 must be started. In response to the 24th interrupt pulse STPU the content of the memory location PC becomes equal to 1. The question whether the content of the memory location PC is equal to 1 is now answered in the affirmative and in response thereto the signal CLK is made equal to zero. This concludes the interrupt programme in response to the 24th interrupt pulse STPU and the programmable control unit 151 returns to the interrupted programme. In response to the 25th interrupt pulse STPU the content of the memory location PC becomes equal to zero. The question whether the content of the memory location PC is equal to 1 is again answered in the negative and the question whether the content of the memory location PC is smaller than or equal to zero is answered in the affirmative. In response, the signal CLK is again made one. The question whether FLBIT is equal to zero is again answered in the affirmative and the address pointer ADPOINT is raised again by 1. The address pointer ADPOINT now points to the memory location two placed on from the memory location marked GOAC and the content of that memory location is now stored in memory location PC.

This content is a number that is less than 25, e.g. 18. As described hereinbefore, the signal CLK again becomes 1 in response to the next interrupt pulse STPU. In response to this 0—1 changeover of the signal CLK, the stepping motor 153 makes one step. The signal CLK then remains 1 until the content of the memory location PC has become equal to 2. In response to the next interrupt pulse STPU, the content of the memory location PC becomes 1 and the signal CLK again becomes zero. In response to the then next interrupt pulse STPU, signal CLK again becomes equal to 1 and the address pointer ADPOINT is again increased by 1 so that the content of the next memory location indicated by the address pointer ADPOINT is now stored in the memory location PC. In this way the successive memory locations shown in Fig. 6A are run through until the memory location whose FLBIT is equal to 1 is reached. This memory location contains, for example, the digit 8 as content. This means that in response to the next 6 interrupt pulses STPU after the address pointer has indicated this memory location, the output signal CLK is equal to 1. In response to the 7th interrupt pulse STPU the content of the memory location PC becomes 1 and in response thereto the signal CLK becomes zero. In response to the then following 8th interrupt pulse STPU the content of the memory location PC becomes zero in response to which CLK again becomes equal to 1. Since FLBIT is now not equal to zero, the address pointer ADPOINT is not increased by 1 and continues to point to this memory location. Via the output N of the block "FLBIT=0" the content of this memory location is again stored in the memory location PC. This cycle repeats time after time. The frequency of the 0—1 changeovers in the signal CLK is thus equal to one-eighth of the frequency of the pulses STPU. The stepping motor 153 is thus controlled with pulses whose frequency is one-eighth of the frequency of the pulses STPU. The stepping motor 153 now rotates in synchronism with the pulse generator 150. As described in connection with Fig. 7, a check is then made through the programme to see whether the stepping motor 153 is to be stopped.

As long as this is not the case, the fact that FLBIT is 1 ensures that the address pointer ADPOINT is not increased by 1, so that the content of this memory location is again and again stored in the memory location PC. However, as soon as the control unit 151 receives the signal that the stepping motor 153 is to be stopped, the address pointer ADPOINT is increased by 1 via the output Y of the block "STO". In response to the next time that the content of the memory location PC is equal to zero, the signal CLK is again made equal to 1 via the output Y of the block "PC≤0", while the question whether FLBIT is equal to zero is again answered in the affirmative. In response thereto, the address pointer ADPOINT is again increased by 1 and the content of the associated memory location is stored in the memory location PC. In the same way as described hereinbefore, the memory locations up to and including the memory location marked STOPDE are now successively indicated by the address pointer ADPOINT. The figures in those memory locations become increasingly larger so that the 0—1 changeovers of the signal CLK occur at ever increasing intervals and the stepping motor 153 rotates continuously more slowly. Finally the address pointer ADPOINT reaches the memory location marked STOPDE and as already described hereinbefore this causes the signal CLK no longer to change and the stepping motor 153 stops.

In the foregoing description, the content of the memory location PC is always reduced by 1 until the said content became equal to zero. Other ways of counting are possible within the scope of the invention. One possibility is to increase continually the content of the memory location PC until its content is equal to the content of the memory location addressed by the address pointer ADPOINT.

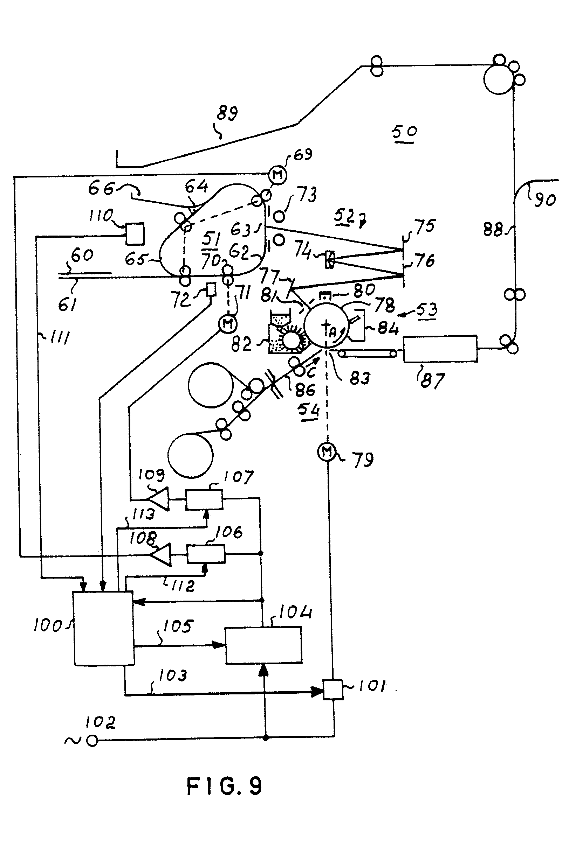

Fig. 9 is a diagrammatic section of an indirect electrophotographic copying machine 50. The copying machine 50 comprises an original conveyor means 51, an optical section 52, a processing section 53 and a copy section 54.

The original conveyor means comprises an entry table 61 on which an original 60 to be copied can be placed. The original conveyor means also comprises a conveyor track 62 in which the original 60 can be conveyed past an exposure window 63 in the form of a slit.

Switch 64 ensures that the original can be returned via a return track 65 to the exposure window 63 or discharged to a receiving tray 66. In conveyor track 62 the original can be conveyed by a number of conveyor rollers driven by a stepping motor 69 via toothed belts indicated diagrammatically by dashed lines. One pair of conveyor rollers 70 is driven by a stepping motor 71 and cooperates with a sensor 72 for re-positioning the original on each cycle, as described, for example, in laid-open Netherlands patent application 7301199.

The exposure window 63 can be illuminated by an illuminating device 73. An optical system, consisting of a movable lens 74 and a plurality of mirrors 75, 76 and 77, of which mirrors 75 and 76 are also movable, images the exposure window 63 with one of several imaging ratios on a photoconductive medium 78.

In Fig. 9 the photoconductive medium 78 is shown as a drum but other embodiments are equally possible for the photoconductive medium, e.g. an endless belt or a plate. Photoconductive medium 78 can be driven in the direction of arrow A by means of a synchronous motor 79. The processing section 53 comprises a charging station 80 in which the photoconductive medium 78 is provided with an electrostatic charge. It also comprises an exposure station 81 in which the image of the exposure window 63 is projected on the medium 78 to form on the medium 78 an electrostatic latent image of an original conveyed past the exposure window 63. Processing section 53 also comprises a developing station 82 in which the latent image can be developed to a visible image, an image transfer station 83 in which the developed image can be transferred from medium 78 to a receiving material, and a cleaning station 84 in which developer remaining after transfer on the medium 78 can be removed therefrom.

Fig. 9 shows only one way in which an electrostatic latent image can be formed. Various other ways are known and can also be used in the scope of this invention.

In the image transfer station 83 a developed image can be transferred from the photoconductive medium 78 to a receiving material which can be fed from a supply in the direction of arrow C via a conveyor track 86. After transfer, the receiving material is conveyed on to a fixing device 87 and then discharged via a conveyor track 88 to a receiving tray 89 or via discharge 90 to any other device for further processing. The copying machine shown in Fig. 9 is controlled by means of a programmable control unit 100, comprising a central processing unit, inputs and outputs, a memory and an internal control system. The operation of a current part of the programme can be interrupted by inputting interrupt signals to an interrupt input of the control unit 100, in order to give priority treatment to another programme section.

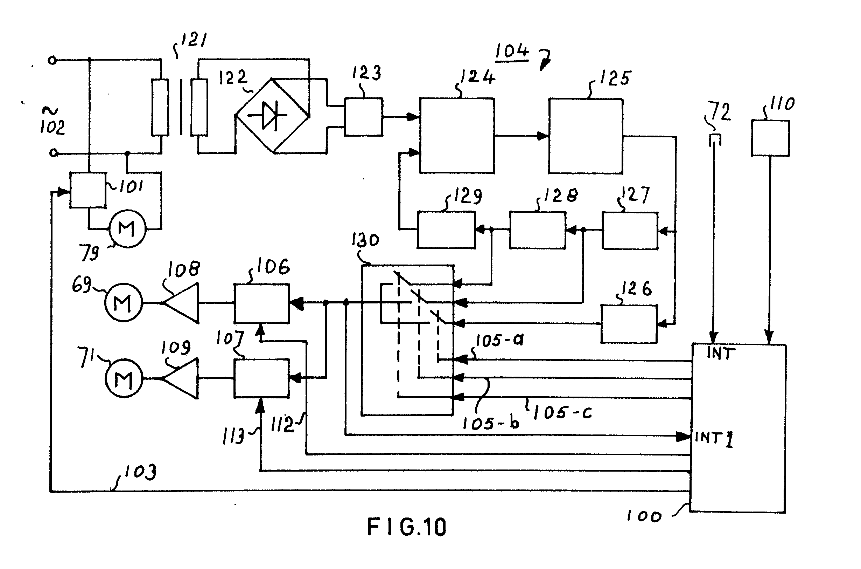

Some connecting lines between the control unit 100 and other components are shown insofar as they are of importance to an understanding of this invention. The synchronous motor 79 is adapted to be connected by a solid-state relay 101 to the mains indicated diagrammatically at 102. Relay 101 is connected via line 103 to an output of the control unit 100. A frequency-multiplier circuit 104 is also connected to the mains 102. A control input of circuit 104 is connected by line 105 to an output of the control unit 100. The output signal of circuit 104 is a pulse signal whose frequency is a multiple of the frequency of the mains (Fig. 10), this multiple being adjustable by means of a suitable signal at the control input. The output of circuit 104 is connected to two circuits 106 and 107 of a type as described hereinbefore in connection with Figs. 1—4, and also to an interrupt input INT 1 of the control unit 100. The outputs of the circuits 106 and 107 are connected via the power amplifiers 108 and 109 to the stepping motors 69 and 71 respectively. Sensor 72 is connected to an interrupt input INT of control unit 100. A control panel 110, which can be used inter alia to select a required imaging ratio and give a start signal, is connected via a line 111 to the control unit 100.

The copying machine 50 operates as follows: The operator inputs to the control unit via the control panel 110 the required number of copies to be made of the original 60, and the imaging ratio to be used. After the original 60 has been placed on the entry table 61 the operator starts the copying process by actuating an element for this purpose on the control panel 110. In response, the control unit 100 feeds a signal to relay 101 via line 103 so that relay 101 makes the connection between the synchronous motor 79 and the mains 102. Synchronous motor 79 thus rotates at a number of revolutions that is directly related to the frequency of the mains 102. As a result, the speed of conveyance of the photoconductive medium 78 is directly related to and synchronous with the mains frequency. The frequency-multiplier circuit 104 receives via line 105 from control unit 100 a signal by means of which the frequency of the output signal of the circuit 104 is adjusted to the required imaging ratio. The output signal of circuit 104 is synchronous with the mains and is fed to the circuits 106 and 107. In response to the start of the copying process the control unit 100 delivers a signal to a line 112 by means of which circuit 106 via the amplifier 108 starts stepping motor 69 and keeps it going. The original 60 is then conveyed in the conveyor means 51.

The speed of conveyance of the original 60 in the conveyor means 51 is determined by the speed of rotation of the stepping motor 69. Since the speed of rotation of the stepping motor 69 in turn is determined by the frequency of the ouput signal of circuit 104 and since this frequency is a specific multiple of the frequency of the mains 102, the speed of conveyance of the original 60 is directly related to and synchronous with the frequency of the mains 102, as is the speed of conveyance of the photoconductive medium 78. Consequently, the original 60 and the photoconductive medium 78 move in synchronism with one another, the speeds of conveyance being in inverse proportion to the imaging ratio.

In the conveyor means 51 the leading edge of the original 60 is sensed by the sensor 72 which then delivers an interrupt signal to the control unit 100. In response to the interrupt signal from sensor 72, the current part of the programme is interrupted and a programme part than enables the control unit 100 to count the pulses originating from circuit 104 is then given priority treatment. This counting is carried out as follows:

Each time circuit 104 generates a pulse this pulse is fed as already described hereinbefore to the interrupt input of the control unit 100.

In response to this, the current part of the programme is interrupted and another part of the programme is given priority treatment. The priority part of the programme ensures that the content of a first memory location is increased by one, the content of this memory location having been set to zero in response to the interrupt signal from the sensor 72. Once the content of this memory location has been increased by one, the increased content is compared with a fixed number by means of the priority-treatment part of the programme. In a manner to be described in detail hereinafter, this fixed number is related to the distance between the sensor 72 and the conveyor rollers 70. If the increased content is smaller than the fixed number, the control unit returns to the interrupted part of the programme. If the content, however, as a result of the increase has become equal to the fixed number then the control unit 100 delivers a signal on line 113 by means of which the circuit 107 via the amplifier 109 starts the stepping motor 71 and keeps it going.

The relationship between the fixed number and the said distance is as follows: Each time circuit 104 has delivered a predetermined number of pulses, circuit 106 delivers a pulse and stepping motor 69 moves one step in response thereto, i.e. it rotates through a determined angle. By means of the toothed belts and conveyor rollers in the conveyor means 51, this rotation through a determined angle corresponds to the original 60 being conveyed over a determined distance. The distance between the sensor 72 and the conveyor rollers 70 can therefore be expressed as the number of pulses delivered by circuit 104 to circuit 106 and to the interrupt input of the control unit 100 in order to cause the original 60 to be conveyed over said distance. The fixed number will be somewhat greater than this latter number of pulses in order to allow the orginal to form a bulge in front of the rollers 70. As a result, as described in the laid-open Netherlands patent application 7301199, any lateral shift of the front edge required can be carried out. After the lateral shift, if required, has been carried out, the control unit 100 delivers the above-mentioned signal at line 113. In order to obtain great accuracy of position of the original 60, the stepping motors 69 and 71 may be types having a small angular rotation per step. This may have the result that the frequency at which the pulses are offered to the stepping motor, i.e. the frequency of the output signal of the circuits 106 and 107, is too high to start the stepping motors 69 and 71 from standstill. The stepping motor 71 is now started in a specific manner by means of the circuit 107. As will be apparent from the description in connection with Figs. 1—8, both the position and the speed of the front edge of the original 60 which had stopped in the nip between the conveyor rollers 70, are consequently known with great accuracy, this being very important for finally positioning the image on the receiving material with high accuracy. The final speed to be reached by the front edge of the original 60 is of course the speed at which the rest of the original 60 is conveyed through the conveyor means 51. This speed must in all cases be reached before the front edge arrives at the exposure window 63.

As described hereinbefore, the combination of on the one side stepping motors with their described control for the conveyance of the original 60 and on the other side a synchronous motor (which may for example be a stepping motor but may also be another type of synchronous motor) for the conveyance of the photoconductive medium 78 has the result that for each imaging ratio the speed of conveyance of the original 60 and the photoconductive medium 78 are fully synchronized.

Consequently, there is no blurring of the image projected by the optical section 52 onto the photoconductive medium 78. During the subsequent transport of the original 60, the latter is imaged in the exposure station 81 onto the photoconductive medium 78 electrostatically charged in the charging station 80, so that an electrostatic latent image is formed. The electrostatic latent image is then developed in known manner in the developing station 82 and transferred onto a receiving material in the image transfer station 83. The copy made is then fixed in the fixing device 87 and then deposited in the receiving tray 89 or discharged via discharge 90. Any developing material remaining on the photoconductive medium 78 is removed therefrom in the cleaning station 84. In the meantime the front edge of the original 60 has passed the exposure window 63 and has been conveyed on in the direction of the switch 64.

If more than one copy of the original 60 is required and the sensor 72 has detected the trailing edge of the original 60 in good time before the leading edge has reached the switch 64, the switch 64 is set into the position in which the original can again be fed to the exposure window 63 along the return track 65. If the original is longer, the switch 64 is set into the position in which the original can be discharged to the receiving tray 66.

The switch 64 can be controlled in known manner either directly by means of time or distance measurement switches, or via length measurement by counting the pulses originating from the circuit 104 by the control unit 100.

In the same way as described hereinbefore concerning the front edge, the sensor 72 detects the rear edge of the original 60, delivers an interrupt signal to the control unit 100 and, in response to such interrupt signal, the content of a second memory location is set to zero and in response to each pulse from the circuit 104 the content of the second memory location is increased by one until at least a second number of pulses has been counted. This number need not be equal to the fixed number referred to hereinbefore, because the sensor 72 can contain two separate sensing elements for detecting the front edge and the rear edge of the original 60. Those two sensing elements may be so disposed that their distances from the conveyor rollers 70 are not equal. After the second number of pulses has been counted, the control unit 100 delivers a signal to the circuit 107 via the line 113, so that the stepping motor 71 is stopped. Since the conveyor rollers 70 do not convey anything after the rear edge of the original has passed, it is not necessary to stop the stepping motor 71 in any specific way. However, in view of the impacts that might occur if the stepping motor 71 and the rollers 70 were abruptly stopped, it is advantageous for the stoppage of the stepping motor 71 to take place in a specific manner as described in connection with Figs. 1—8.

The way in which the control unit can determine the position of the front edge and the rear edge of the original in the area between the sensor 72 and the rollers 70 by counting the pulses originating from the circuit 104 has been described hereinbefore. It should be noted that counting interrupt signals by means of a programmable control unit in order to determine the position of a moving object has already been described *per se* in the laid-open Netherlands patent application 7704160 (GB—A—1573135).

Simultaneously with the generation of the signal on the line 113 in order to start the stepping motor 71 and keep it going, the content of a third memory location is set to zero and each time increased by one in response to a pulse originating from the circuit 104 at the associated interrupt input.

The content of the third memory location is compared, after each increase, with a number that corresponds to the length of the return track expressed as the number of pulses that has to be fed to the stepping motor 71 to stop the front edge of the original 60 again in the nip between the rollers 70.

The use of a third memory location as described hereinbefore can be avoided in the following manner, so that this memory location can be used for other purposes. The content of the first memory location already mentioned is not only compared, after each increase, with the first fixed number corresponding to the distance between the sensor 72 and the conveyor rollers 70, but also with a second fixed number indicating the length of the return track expressed as a number of pulses. Each time the content of the first memory location has become equal to the second fixed number, the content of the first memory location is made equal to zero. In response to each pulse originating from circuit 104, the content of the first memory location is then again increased by one. Since the lengths of the return tracks are constant and since the conveyance is synchronized with the pulses originating from the circuit 104, the same first fixed number can be re-used on each passage of the original 60. As a result of the synchronization achieved, the sensor 72 need detect the front edge and rear edge only during the first passage of the original 60 and not again on subsequent passages.

The stoppage of the rollers 70 can be controlled both shortly after the rear edge of the original 60 has passed—for which purpose the length of the original 60 must be measured—or just before the front edge is to stop in the nip between the rollers 70—for which purpose only the length of the return track need be known. After the required number of copies has been made, the original 60 is deposited via the switch 64 in the receiving tray 66 and the stepping motors 69 and 71 are stopped and the relay 101 is switched off so that the motor 79 stops. To control the processing stations of an electrophotographic copying machine it is known to count pulses generated by a pulse generator driven in synchronism with or by the moving photoconductive medium and each time when a specific number of pulses has been counted since a starting event to effect an action associated with such counted number. Controls of this kind are described, performed by a conventional control system, in US Patent Specification 3,917,396, and, performed by a programmable control system, in the laid-open Netherlands patent application 7704160 already referred to. As a result of the synchronization between the conveyance of the original 60 by means of stepping motors 69 and 71 and the conveyance of the photoconductive medium 78 by means of the synchronous motor 79 it is no longer necessary to use different pulse generators driven by the original 60 and the photoconductive medium 78. It is sufficient to count the pulses originating from the circuit 104. The pulses generated by the circuit 104 are—as a result of using a synchronous motor—synchronous with the conveyance of the photoconductive medium 78 and—as a result of the stepping motors 69 and 71—synchronous with the conveyance of the original 60 in the original conveyor means 51. Thus circuit 104 forms one independent source which generates the associated interrupt signals for the control unit 100 both for controlling the processing stations along the path of the photoconductive medium 78 and for the conveyance of the original 60. In this connection it should be noted that the frequency at which the circuit 104 generates pulses in the example described is dependent upon the imaging ratio selected. For the control of the processing stations in the sections 53 and 54 of the copying machine this means that those pulses do not represent a fixed distance always, but only represent a fixed distance for each imaging ratio separately. The pulses can be counted now in various ways. The first way (see Fig. 11) is for the frequency at which the pulses are generated at the output of circuit 104 first to be divided in a divider 115 by a number dependent upon the imaging ratio and for the pulses fed at the divided frequency to the interrupt input of the control unit 100. The divider 115 is set by a signal on a line 116 originating from the control unit 100, e.g. by one of a plurality of electronic dividers being rendered operative in a manner described hereinafter with respect to the switch 130 in Fig. 10.

The second way is to store the numbers with which the contents of the various memory locations used for counting must be compared in a ROM of the control unit 100 for one of the imaging ratio's, and to multiply them, on each copying cycle, by a number dependent upon the imaging ratio selected. During the relevant copying cycle the multiplied numbers are stored in a read/write memory and are used as the fixed numbers with which the said contents are compared.

In Fig. 10 a block diagram of the frequency multiplier 104 is shown. The frequency multiplier 104 comprises a blocking transformer 121, the input of which is connected to the mains 102 and the outputs of which are connected to a double-phase rectifier 122. The rectifier 122 is connected to a band filter 123 tuned to a frequency which is twice the nominal frequency of the mains. The output of band filter 123 is connected to the first input of a phase-comparison circuit 124. The output of circuit 124 is connected in known manner via a low-pass filter (not shown) to the control input of a voltage-controlled oscillator 125. The output of oscillator 125 is connected both to a 41-divider 126 and to a 29-divider 127.

The output of the 29-divider 127 is connected to a 2-divider 128, the output of which is connected via a divider 129 to the second input of circuit 124. The outputs of dividers 126, 127 and 128 are respectively connected to the three inputs of an electronic 3-way switch 130.

Line 105 is connected to a control input of switch 130. Line 105 comprises three lines 105-a, 105-b, 105-c, always one of which is carrying a signal. In response to these signals the 3-way switch 130 either connects the output of divider 126 or the output of divider 127, or the output of divider 128, to the output of the 3-way switch 130. The output of switch 130 is connected to the interrupt input INT 1 of control unit 100 and to the input of circuits 106 and 107. Circuits 106 and 107 are connected to the control unit 100 via lines 112 and 113 respectively. The control unit 100 thus performs the function of the signal source 45 of Fig. 2. Circuits 106 and 107 are connected in the manner already described to the stepping motors 69 and 71 respectively via the amplifiers 108 acd 109 respectively.

Circuit 104 operates as follows: Transformer 121 transforms the mains voltage to a low A.C. voltage of the same frequency. The double-phase rectifier 122 converts this A.C. voltage into a pulsating D.C. voltage of a frequency twice that of the mains frequency. Band filter 123 removes undesirable frequencies from the pulsating D.C. voltage before it is compared in circuit 124 with the output signal of divider 129. The output signal of circuit 124 controls the oscillator 125 so that the latter delivers an A.C. voltage signal or a pulsating D.C. voltage signal at a frequency such that division of this frequency successively by 29, 2 and by means of the divider 129 delivers a signal of a frequency equal to twice the mains frequency. Since the divider 126 is a 41-divider, the outputs of the dividers 128, 126 and 127 deliver signals whose frequencies are in the ratio of $1:\sqrt{2}:2$ corresponding to imaging ratios of 1:1, $1:\sqrt{2}$ and 1:2 for the copying machine 50. If the copying machine has other imaging ratios, a signal with the associated frequency can easily be generated by adding and adapting the dividers between the output of the oscillator 125 and the second input of circuit 124.

The invention is described hereinbefore by reference to its use in a copying machine operating by the indirect electrophotographic process. It should be explicitly noted that the use of the invention is not restricted to this type of copying machines and that the invention can be used with the same advantages in copying machines operating by one of the numerous other known processes enabling one or more copies to be made from an original.

## Claims

1. A copying machine comprising:

— a number of work stations (52, 53, 54) which are installed along the path of circulation of an image element (78) being moved,
— an original conveyor means (51) for moving an original in synchronism with the said element (78),
— a pulse generator (104) for generating pulses at a frequency being proportional to the speed of moving the image element (78),
— a control device (100) which counts the pulses being generated and controls the work stations (52, 53, 54) in dependence on the number of pulses being counted,

characterised in that

— the copying machine is provided with a synchronous motor (79) for driving the image element (78), and with at least one synchronous motor (69, 71) for driving the original conveyor means (51),
— the frequency (frequencies) of the voltages supplied to said synchronous motors and the frequency at which the pulses are generated being proportional to and derived from the frequency of a common frequency source (102).

2. A copying machine according to claim 1, characterised in that the pulse generator (104) derives the frequency of the pulses being generated from the frequency of one of the A.C. voltages supplied to the synchronous motors (69, 71, 79).

3. A copying machine according to claim 1, characterised in that

— the synchronous motors (69, 71) for driving the conveyor means (51) are stepping motors,
— the pulse generator (104) derives the frequency of the pulses from the frequency of the voltages supplied to the synchronous motor (79) for driving the image element (78),
— the voltages supplied to the stepping motors (69, 71) are delivered by devices (106, 107, 108, 109) controlling the stepping motors, said devices deriving the frequency of the supply voltages from the frequency of the pulses being generated.

4. A programmable control system for a copying machine, comprising at least one interrupt input for interrupting a current programme in response to an interrupt pulse fed to said interrupt input and for the priority treatment of an interrupt programme, the copying machine being provided with a conveyor means for an original to be copied, and with a conveyor means for an image element upon which an image derived from the original can be formed, and with means for generating first interrupt pulses in synchronism with the conveyance of the original, and second interrupt pulses in synchronism with the conveyance of the image element, characterised in that each of the conveyor means comprises at least one synchronous motor (69, 71, 79), in that a source (102) is provided which delivers a signal with a first A.C. voltage component, in that means (101, 104) are provided which are connected to the source (102) for deriving a control signal from the A.C. voltage component of the source signal for each of the synchronous motors (69, 71, 79), said control signals comprising an A.C. voltage component whose frequency is always proportional to the frequency of the first A.C. voltage component of the source signal and the A.C. voltage component of one of the control signals forms the interrupt pulses.

**Patentansprüche**

1. Kopiermaschine mit

— einer Anzahl von Bearbeitungsstationen (52, 53, 54), die entlang der Umlaufbahn eines bewegten Abbildungselements (78) angeordnet sind,

— einer Vorlagen-Fördereinrichtung (51) für einen synchronen Transport einer Vorlage mit dem Element (78),

— einem Impulsgenerator (104) zur Erzeugung von Impulsen mit einer Frequenz, die proportional der Bewegungsgeschwindigkeit des Abbildungselements (78) ist,

— einer Steuereinrichtung (100), welche die erzeugten Impulse zählt und die Bearbeitungsstationen (52, 53, 54) in Abhängigkeit von der gezählten Anzahl von Impulsen steuert,

dadurch gekennzeichnet,

— dass die Kopiermaschine einen Synchronmotor (79) zum Antrieb des Abbildungselements (78) und mindestens einer Synchronmotor (69, 71) zum Antrieb der Vorlagen-Fördereinrichtung (51) enthält, wobei die Frequenz (Frequenzen) der den Synchronmotoren zugeführten Spannungen und die Frequenz, mit der die Impulse erzeugt werden, von der Frequenz einer gemeinsamen Frequenzquelle (102) abgeleitet werden und proportional zu dieser Frequenz sind.

2. Kopiermaschine nach Anspruch 1, dadurch gekennzeichnet, dass der Impulsgenerator (104) die Frequenz der erzeugten Impulse von der Frequenz einer der Wechselspannungen ableitet, die den Synchronmotoren (69, 71, 79) zugeführt werden.

3. Kopiermaschine nach Anspruch 1, dadurch gekennzeichnet,

— dass die Synchronmotoren (69, 71) zum Antrieb der Fördereinrichtung (51) Schrittmotoren sind,

— dass der Impulsgenerator (104) die Frequenz der Impulse von der Frequenz der Spannungen ableitet, die dem Synchronmotor (79) zum Antrieb des Abbildungselements (78) zugeführt werden, und

— dass die den Schrittmotoren (69, 71) zugeführten Spannungen durch die Schrittmotoren steuernden Einrichtungen (106, 107, 108, 109) zugeführt werden, welche die Frequenz der zugeführten Spannungen von der Frequenz der erzeugten Impulse ableiten.

4. Programmierbares Steuersystem für eine Kopiermaschine, mit mindestens einem Unterbrechungseingang zur Unterbrechung eines laufenden Programms in Abhängigkeit von einem Unterbrechungsimpuls, der dem Unterbrechungseingang zugeführt wird, sowie für die Prioritätsbehandlung eines Unterbrechungsprogramms, welche Kopiermaschine mit einer Fördereinrichtung für eine zu kopierende Vorlage versehen ist, mit einer Fördereinrichtung für dein Abbildungselement, auf dem ein von der Vorlage abgeleitetes Bild abbildbar ist, sowie mit einer Einrichtung zur Erzeugung erster Unterbrechungsimpulse synchron mit der Bewegung der Vorlage und von zweiten Unterbrechungsimpulsen synchron mit der Bewegung des Abbildungselements, dadurch gekennzeichnet, dass jede der Fördereinrichtungen mindestens einen Synchronmotor (69, 71, 79) enthält, dass eine Quelle (102) vorgesehen ist, die ein Signal mit einer ersten Wechselspannungskomponente zuführt, und dass eine Einrichtung (101, 104) mit der Quelle (102) verbunden ist, um ein Steuersignal von der Wechselspannungskomponente des Quellensignals für jeden der Synchronmotoren (69, 71, 79) abzuleiten, wobei die Steuersignale eine Wechselspannungskomponente enthalten, deren Frequenz immer proportional der Frequenz der ersten Wechselspannungskomponente des Quellensignals ist, und wobei die Wechselspannungskomponente eines der Steuersignale die Unterbrechungsimpulse bildet.

**Revendications**

1. Machine de reprographie, comportant

— un certain nombre de postes de traitement (52, 53, 54) qui sont montés le long du trajet de circulation d'un élément d'image (78) en mouvement,

— un dispositif convoyeur d'original (51) destiné à transporter un original en synchronisme avec ledit élément (78),

— un générateur d'impulsions (104) qui produit des impulsions à une fréquence proportionnelle à la vitesse de déplacement de l'élément d'image (78),

— un dispositif de commande (100) qui compte les impulsions produites et qui commande les postes de traitement (52, 53, 54) en fonction du nombre des impulsions comptées,

caractérisée en ce qu'elle comporte un moteur synchrone (79) pour entraîner l'élément d'image (78) et au moins un moteur synchrone (69, 71) pour entraîner le dispositif convoyeur d'original (51), la fréquence (les fréquences) des tensions fournies auxdits moteurs synchrones et la fréquence à laquelle les impulsions sont produites étant proportionnelles à la fréquence d'une source de fréquence commune (102) et dérivées de cette fréquence.

2. Machine de reprographie selon la revendication 1, caractérisée en ce que le générateur d'impulsions (104) dérive la fréquence des impulsions produites de la fréquence de l'une des tensions alternatives fournies aux moteurs synchrones (69, 71, 79).

3. Machine de reprographie selon la revendication 1, caractérisée en ce que

— les moteurs synchrones (69, 71) qui entraînent le dispositif convoyeur (51) sont des moteurs pas à pas,
— le générateur d'impulsions (104) dérive la fréquence des impulsions de la fréquence des tensions fournies au moteur synchrone (79) qui entraîne l'élément d'image (78),
— les tensions fournies aux moteurs pas à pas (69, 71) sont produites par des dispositifs (106, 107, 108, 109) qui commandent les moteurs pas à pas, lesdits dispositifs dérivant la fréquence des tensions d'alimentation de la fréquence des impulsions produites.

4. Système de commande programmable pour une machine de reprographie comportant au moins une entrée d'interruption pour interrompre un programme en cours en réponse à une impulsion d'interruption appliquée à ladite entrée d'interruption et pour le traitement prioritaire d'un programme d'interruption, la machine de reprographie comprenant un dispositif convoyeur pour un original à reproduire et un dispositif convoyeur pour un élément d'image sur lequel un image provenant de l'original peut être formée, et un dispositif pour produire des premières impulsions d'interruption en synchronisme avec le convoyage de l'original et des secondes impulsions d'interruption en synchronisme avec le convoyage de l'élément d'image, caractérisé en ce que chacun des dispositifs convoyeurs comporte au moins un moteur synchrone (69, 71, 79), en ce qu'une source (102) est prévue pour délivrer un signal avec une première composante de tension alternative, en ce que des dispositifs (101, 104) sont prévus, qui sont connectés à la source (102) pour dériver un signal de commande de la composante de tension alternative du signal de la source pour chacun des moteurs synchrones (69, 71, 79), lesdits signaux de commande comprenant une composante de tension alternative dont la fréquence est toujours proportionnelle à la fréquence de la première composante de tension alternative du signal de la source et la composante de tension alternative de l'un des signaux de commande formant les impulsions d'interruption.

FIG.1

FIG.1A

FIG. 2

A                                       D U P

```
    0   0 0 0 0 0 0 0 0 0 0   0       1 0 0
    1   0 0 0 0 0 0 0 0 0 0 1         0 0 1
    2                 1               |
    |                 |               |
  1 6 8   0 0 0 1 0 1 0 1 0 0 0       0 0 1
  1 6 9   0 0 0 1 0 1 0 1 0 0 1       0 0 0
          |                 |         |
          |                 |         |
  3 3 6   0 0 1 0 1 0 1 0 0 0 0       0 0 0
  3 3 7   0 0 1 0 1 0 1 0 0 0 1       0 0 1
                            |         |
                            |         |
2 0 2 2   1 1 1 1 1 1 0 0 1 1 0       0 0 0
2 0 2 3   1 1 1 1 1 1 0 0 1 1 1       0 0 1
2 0 2 4   1 1 1 1 1 1 0 1 0 0 0       0 0 1
          1 1 1 1 1 1 0 1 0 0 1       0 1 1
          1 1 1 1 1 1 0 1 0 1 0       0 1 0
          1 1 1 1 1 1 0 1 0 1 1       0 1 0
          1 1 1 1 1 1 0 1 1 0 0       0 1 0
          1 1 1 1 1 1 0 1 1 0 1       0 1 0
          1 1 1 1 1 1 0 1 1 1 0       0 1 0
2 0 3 1   1 1 1 1 1 1 0 1 1 1 1       0 1 1
```

FIG. 2A

FIG. 11

FIG. 3A

FIG. 3B

FIG. 4A

FIG. 4B

FIG. 4C

FIG.5

FIG. 6A

FIG. 6B

FIG. 7

FIG. 8

FIG. 9

FIG.10